# EUROPEAN PATENT SPECIFICATION

(11) **EP 1 639 664 B1**
(45) Date of publication and mention of the grant of the patent: **26.09.2007**
(21) Application number: 04742995.6
(22) Date of filing: 17.06.2004
(51) Int. Cl.: H01M 8/02

(54) **FLOW FIELD PLATE GEOMETRIES**
STRÖMUNGSFELDPLATTENGEOMETRIEN
GEOMETRIES DE PLAQUES DE CHAMP D'ECOULEMENT

(30) Priority: 18.06.2003 WO PCT/GB03/02621; 18.07.2003 GB 0316946; 02.04.2004 GB 0407638
(43) Date of publication of application: 29.03.2006
(73) Proprietor: THE MORGAN CRUCIBLE COMPANY PLC, Windsor, Berkshire SL4 1LP (GB)
(72) Inventor: CHAPMAN, Alan Robert Morgan Fuel Cell, Worcestershire DY13 8QR (GB); JAMAIS, Sylvain Morgan Fuel Cell, Worcestershire DY13 8QR (GB); MELLOR, Ian Michael Morgan Fuel Cell, Worcestershire DY13 8QR (GB); TURPIN, Mark Christopher Morgan Fuel Cell, Worcestershire DY13 8QR (GB); JOUVRAY, Alexandre Morgan Fuel Cell, Worcestershire DY13 8QR (GB)
(74) Representative: Boff, James Charles
(86) International application number: PCT/GB2004/002642
(87) International publication number: WO 2004/114446

(56) References cited:
- WO-A-02/065566
- WO-A-02/069426
- WO-A-20/04001874
- DE-A- 10 038 589
- US-B1- 6 569 554

## Description

This invention relates to fuel cells and electrolysers, and is particularly, although not exclusively, applicable to proton exchange membrane fuel cells and electrolysers.

Fuel cells are devices in which a fuel and an oxidant combine in a controlled manner to produce electricity directly. By directly producing electricity without intermediate combustion and generation steps, the electrical efficiency of a fuel cell is higher than using the fuel in a traditional generator. This much is widely known. A fuel cell sounds simple and desirable but many man-years of work have been expended in recent years attempting to produce practical fuel cell systems. An electrolyser is effectively a fuel cell in reverse, in which electricity is used to split water into hydrogen and oxygen.

Both fuel cells and electrolysers are likely to become important parts of the so-called "hydrogen economy". In the following, reference is made to fuel cells, but it should be remembered that the same principles apply to electrolysers. One type of fuel cell in commercial production is the so-called proton exchange membrane (PEM) fuel cell [sometimes called polymer electrolyte or solid polymer fuel cells (PEFCs)]. Such cells use hydrogen as a fuel and comprise an electrically insulating (but ionically conducting) polymer membrane having porous electrodes disposed on both faces. The membrane is typically a fluorosulphonate polymer and the electrodes typically comprise a noble metal catalyst dispersed on a carbonaceous powder substrate. This assembly of electrodes and membrane is often referred to as the membrane electrode assembly (MEA).

Hydrogen fuel is supplied to one electrode (the anode) where it is oxidised to release electrons to the anode and hydrogen ions to the electrolyte. Oxidant (typically air or oxygen) is supplied to the other electrode (the cathode) where electrons from the cathode combine with the oxygen and the hydrogen ions to produce water. A sub-class of proton exchange membrane fuel cell is the direct methanol fuel cell in which methanol is supplied as the fuel. This invention is intended to cover such fuel cells and indeed any other fuel cell.

In commercial PEM fuel cells many such MEAs are stacked together separated by flow field plates (also referred to as bipolar plates or separators). The flow field plates are typically formed of metal, graphite or carbon composites to permit good transfer of electrons between the anode of one membrane and the cathode of the adjacent membrane. The flow field plates have a pattern of grooves on their surface to supply fluid (fuel or oxidant) and to remove water produced as a reaction product of the fuel cell.

Various methods of producing the grooves have been described, for example it has been proposed to form such grooves by machining, embossing or moulding (WO00/41260), and (as is particularly useful for the present invention) by sandblasting through a resist (WO01/04982).

International Patent Application No. WO01/04982 disclosed a method of machining flow field plates by means of applying a resist or mask to a plate and then using sandblasting (or other etching method using the momentum of moving particles to abrade the surface, e.g. waterjet machining), to form features corresponding to a pattern formed in the mask or resist.

Such a process was shown by WO01/04982 as capable of forming either holes through the flow field plates, or closed bottom pits or channels in the flow field plates. The process of WO01/04982 is incorporated herein in its entirety, as giving sufficient background to enable the invention.

In practice, the majority of plates made to date have been formed by milling the channels.

WO00/41260 discloses a flow field geometry in which substantially straight parallel channels are provided of a width less than about 0.75mm.

WO00/26981 discloses a similar geometry in which highly parallel flow channels of a width less than 800um separated by lands of less than 800µm are used and in which the inter-channel land area is less than 25% of the flow field. Preferred land widths are narrower still. This geometry is stated to improve gas distribution as reducing the need for lateral gas dispersion through the MEA (referred to in WO00/26981 as the DCC [diffusion current collectors]). The geometry is also stated to reduce electrical resistance as it reduces the electrical path length to land areas.

There is a conflict between electrical and gas properties described in WO00/26981, in that reduced land areas are stated to increase electrical resistance. WO00/26981 states that these conflicting requirements may be optimised. WO00/26981 states that the pattern of highly parallel micro-channels may contain interconnections or branch points such as in hatchings or grid patterns. One advantage of the use of narrow channels is stated to be that this encourages water droplet formation across the channels so permitting efficient water removal. However this advantage may not be seen where a grid pattern is used as the pressure either side of a water droplet is likely to be substantially equal.

Cited against WO00/26981 are:-
- US 3814631, which discloses an electrode construction in which micro-channels of more than 0.3mm wide are provided in a frame edge leading to a textured electrode in which protrusions on one face of the electrode match depressions in the opposed face of the electrode.
- US 5108849, which discloses a plate having serpentine tracks of 0.76mm (0.03 inch) width or more with land widths of 0.254mm (0.01 inch) or more.
- WO94/11912, which discloses a plate having discontinuous tracks of 0.76mm (0.03 inch) width and depth. These tracks may be interdigitated.
- WO98/52242, which discloses means for humidifying the membrane,

Narrow channels are known for other devices, for example, WO94/21372 discloses a chemical processing apparatus comprising a three dimensional tortuous channel formed by aligning part channels in adjacent discs. Such a construction has not been used for a fuel cell.

None of the fuel cell related patents disclose a structure of relatively coarse gas delivery channels leading to fine gas channels.

To ensure that the fluids are dispersed evenly to their respective electrode surfaces a so-called gas diffusion layer (GDL) is placed between the electrode and the flow field plate. The gas diffusion layer is a porous material and typically comprises a carbon paper or cloth, often having a bonded layer of carbon powder on one face and coated with a hydrophobic material to promote water rejection. It has been proposed to provide an interdigitated flow field below a macroporous material (US-A-5641586) having connected porosity of pore size range 20-100µm allowing a reduction in size of the gas diffusion layer. Such an arrangement permits gas flow around blocked pores, which is disadvantageous. Build up of reactant products (such as water) can occur in these pores reducing gas transport efficiency. Additionally, such a structure increases the thickness of the flow field plate.

An assembled body of flow field plates and membranes with associated fuel and oxidant supply manifolds is often referred to as a fuel cell stack.

Although the technology described above has proved useful in prototype and in some limited commercial applications, to achieve wider commercial acceptance there is now a demand to reduce the physical size of a fuel cell stack and to reduce its cost. Accordingly, a reduction in the number of components could have beneficial results on size and cost (both through material and assembly costs).

Also, the prior art flow field plates have provided flow fields of matrix, serpentine, linear, or interdigitated form but have not looked to other physical systems for improving the gas flow pathways. Matrix flow fields (in which a grid of lands is provided to support the gas diffusion layer and gas flows between the lands) theoretically provide good gas flow but in practice have had the disadvantage that water is readily trapped within the matrix and blocks it. Further, any blockage can lead to stagnant areas in the flow field.

Linear and serpentine flow fields have fewer problems with water blockage or stagnant areas but have a lower gas flow for a given pressure drop across the flow field. Serpentine flow field patterns also tend to have a problem with gas "short circuiting" by passing from one channel to an adjacent channel having a significantly lower pressure.

Interdigitated flow fields provide a highly efficient delivery of gas but have the disadvantage that high pressures are required to force the gas from the incoming flow field, through the gas diffusion layer, to the outgoing flow field and this results in high parasitic losses.

Additionally, the applicant has found that under conditions of high demand (e.g. currents of 0.6A/cm² or higher) such conventional plates are liable to depletion of oxidant and/or fuel over large parts of the flow field plate.

Known requirements of gas flow fields are:-
- sufficient land area to support the GDL and maintain a cavity for flow of gas
- sufficiently narrow channels to prevent the GDL squeezing into and blocking the channels under the compressive pressures holding the stack together
- and, from WO00/26981, sufficiently narrow channels to reduce the path length of current from areas over the channel to lands, and sufficiently narrow lands to reduce the diffusion distance of gas to areas over the lands.

What WO00/26981 does not solve, except by partition of flow field plates into separate areas, is that narrow channels imply a high pressure drop and so a distinct difference in gas availability from one end of the channels to the other.

In a conventional flow field plate design, the pressure at one end (the outlet end) of the flow field is significantly lower than at the other end (the inlet end) as reactant gases are both consumed in operation of the fuel cell and because of the resistance to flow of the gases. As the demand for fuel or oxidant increases, the ability of such arrangements to deliver reactant gas effectively towards the reactant gas outlet diminishes. The applicant has realised that what is required is a means to provide efficient gas delivery to the whole of the working surface of the fuel cell (that area where effective electrical generation takes place), and in particular in the region of the flow field outlet, so that starvation of reactants does not occur.

US 5686199 describes an arrangement in which a number of flow field segments are tiled to form an overall flow field so that gas flows rapidly to each segment, thereby lowering the overall pressure drop, and improving uniformity of flow across the flow field. However, US 5686199 used parallel arrangements of channels that restricted lateral flow of gas, and so there was limited mixing in the flow field.

The applicant has realised that by looking to physiological systems (the lung) improved flow field geometries may be realised that are likely to have lower parasitic losses due to their shorter gas flow pathways and to have better distribution of reactants over the flow field.

In WO02/065566 the applicants claimed a flow field plate having an assembly of progressively narrowing pattern of channels which could link or be interdigitated with an opposed similar assembly of channels.

In co-pending WO04/001874 the applicants have disclosed flow fields comprising geometries in which gas is delivered by gas delivery channels to a permeable wall, and is then transferred through the permeable wall to gas removal channels. Improved evenness of gas distribution was shown, but this application did not concern itself with water management issues.

The applicants have conducted further trials and found that the geometries of WO04/001874 can be improved by a different arrangement of gas delivery and gas removal channels, and that matrix flow fields can be improved in like manner.

Accordingly, the present invention provides a flow field plate (separator) for a fuel cell or electrolyser, comprising one or more branched primary fluid delivery/removal channels feeding narrower secondary fluid diffusion channels defined by an array of lands forming a network of interconnected fluid diffusion channels therebetween.

The fluid delivery/removal channels and the fluid diffusion channels may be gas delivery/removal channels and gas diffusion channels respectively and in the following these terms are used interchangeably, except where the context demands otherwise.

The branched fluid delivery channels may simply feed the fluid diffusion channels, which themselves lead directly or via a fluid removal channel to a fluid outlet.

Preferably the flow field plate comprises one or more branched fluid delivery channels, interdigitated with one or more branched fluid removal channels, and a permeable wall separating same formed by the array of lands.

The geometries described in WO02/065566 and WO04/001874 have the common feature of providing multiple branched paths for fluid across the flow field so as to provide a more uniform distribution of reactants across the flow field. The applicants have found that such geometries can cause problems in scaling however, in that if designs are simply scaled up to larger sizes, the diffusion paths become long and the widths of the feed channels can become too large.

Accordingly, the present invention additionally provides a flow field plate (separator) for a fuel cell or electrolyser, comprising a tiled array of flow field segments defining a reactant flow field, each segment comprising one or more branched primary fluid delivery/removal channels feeding narrower secondary fluid diffusion channels defined by an array of lands forming a network of interconnected fluid diffusion channels therebetween. The flow field segments may be connected in parallel, in series, or in combinations thereof. Preferably, the segments are connected in series, or in a parallel arrangement of series connected segments.

The flow field may also comprise impermeable barriers separating regions of the flow field and with apertures in or defined by the impermeable barriers providing choke points for the passage of fluid.

Further features of the invention are set out in the claims and as exemplified by the following description with reference to the drawings in which:-
- Fig. 1: shows in plan a flow field plate design in accordance with the invention of WO04/001874;
- Fig. 2: shows an enlarged plan view of area A of Fig. 1;
- Fig. 3: shows an alternative flow field plate design in accordance with both the invention of WO04/001874 and the present invention;
- Fig. 4: shows an enlarged plan view of area E of Fig. 3;
- Fig. 5: shows in part a design for an array type flow field comprising a hexagonal array of channels in accordance with the present invention;
- Fig. 6: shows a further design in accordance with the invention of WO04/001874;
- Fig. 7: shows a design in accordance with the present invention;
- Fig. 8: shows polarisation curves of some flow field designs;
- Fig. 9: shows power curves for some designs;

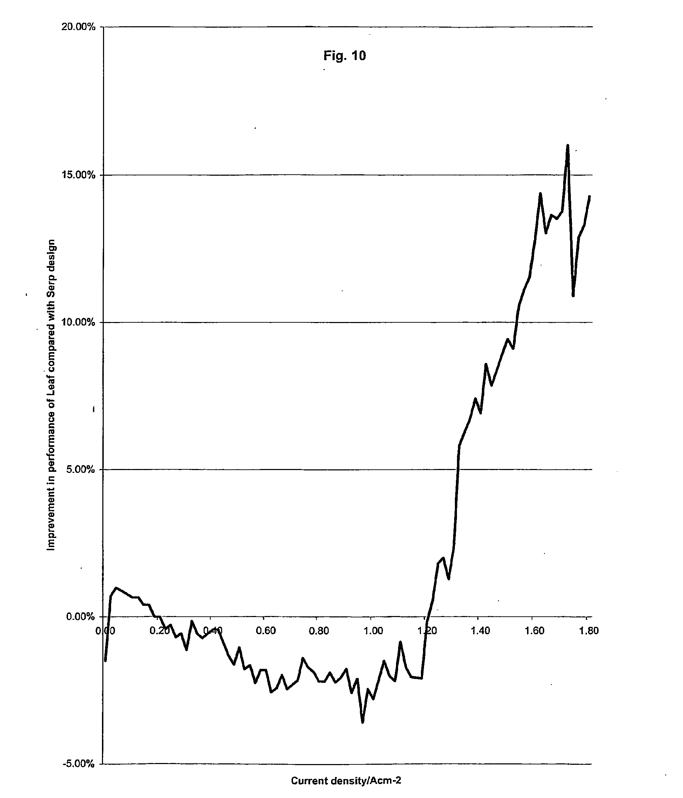

- Fig. 10: shows graphically the improvement in power output measured for a design according to the present invention and a conventional design;
- Fig. 11: is an alternative channel arrangement for use in the design of Fig.5
- Fig. 12: shows a further design usable in conjunction with the present invention
- Fig. 13: shows a flow field in accordance with the present invention;
- Fig. 14: shows in enlarged fragmentary view a portion of the flow field of Fig. 13;
- Fig. 15: shows an alternative embodiment of a parallel array of flow field segments according to the invention;
- Fig. 16: shows a further embodiment of a parallel array of flow field segments according to the invention;
- Fig. 17: shows a series connected array of flow field segments according to the invention;
- Fig. 18: shows a further series connected array of flow field segments according to the invention;
- Fig. 19: shows a series connected array of assemblies comprising parallel connected flow field segments according to the invention;
- Fig. 20: shows a further embodiment of flow field in accordance with the present invention;
- Fig. 21: is a polarisation curve plotting both voltage and power against current density for a conventional serpentine flow field and a flow field in accordance with the present invention;
- Fig. 22: is a plot of voltage against cathode stoichiometry for a conventional serpentine flow field and a flow field in accordance with the present invention; and
- Fig. 23.: is a plot of pressure both voltage across the flow field against "equivalent flow" for a conventional serpentine flow field and a flow field in accordance with the present invention.

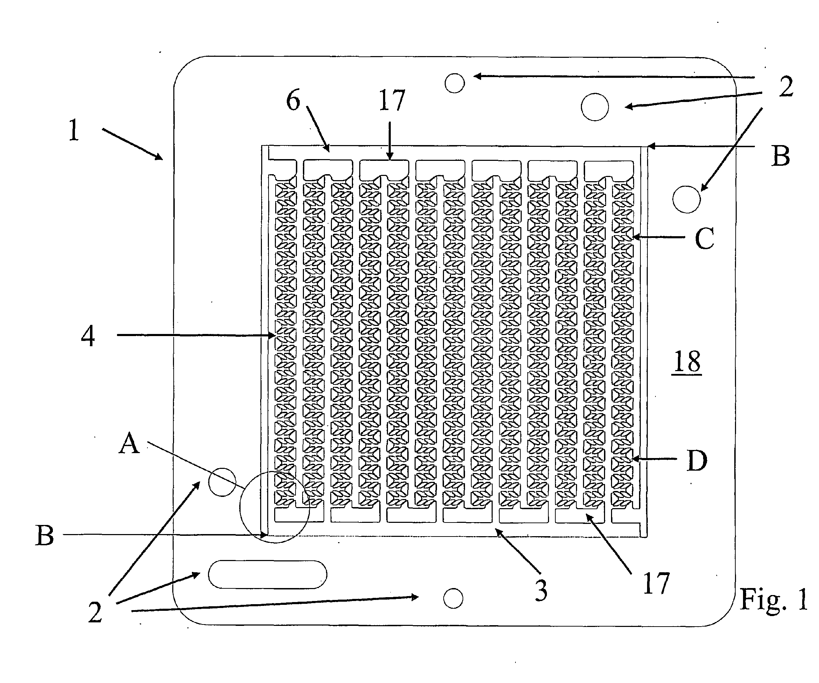

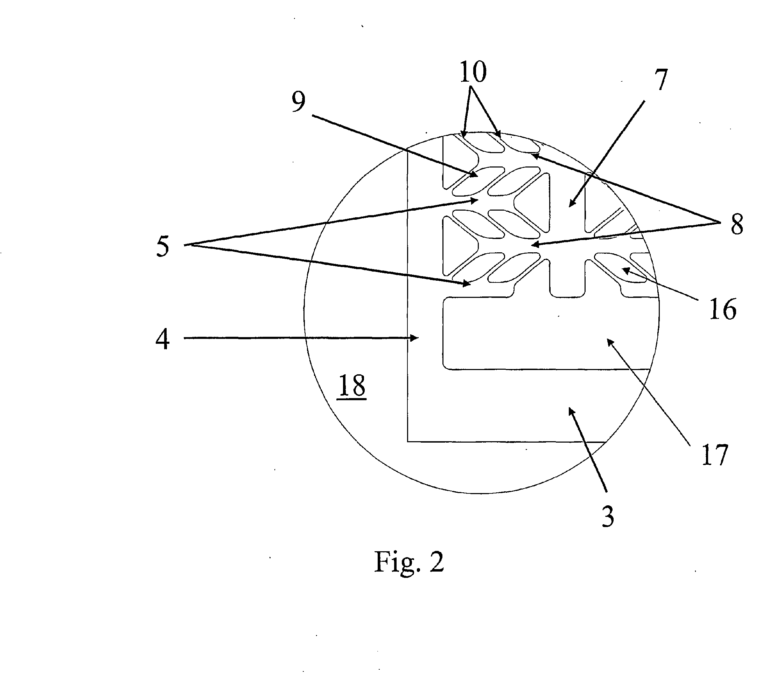

Figs. 1 and 2 show a flow field plate in accordance with the invention of WO04/001874. A flow field plate 1 comprises manifolds and fastening holes 2 in a peripheral frame 18 that forms no part of the actual flow field. The plate also comprises a gas supply channel 3 to which a reactant gas is delivered by a manifold (not shown). Channel 3 communicates with gas delivery channels 4. Gas delivery channels 4 themselves connect to gas delivery sub-channels 5. In similar manner, a gas drain channel 6 connects with gas removal channels 7 and gas removal sub-channels 8.

The gas delivery channels and sub channels 4,5 and the gas removal channels and sub-channels 7,8 define between them a wall 9 having a plurality of diffusion channels 10 that offer a flow path from the gas delivery channels and sub channels 4,5 to the gas removal channels and sub-channels 7,8. In a typical case, for a small fuel cell having a plate size of ~10cm×10cm and a flow field working surface of ~6.5cm×6.5cm, the width of the gas delivery channels would be about 1.25mm, for the sub-channels about 0.5mm, and for the diffusion channels about 0.125mm.

The wall is convoluted on two scales.

On a first scale, it extends in a pleated or concertinaed manner from the gas supply channel 3 to the gas drain channel 6 and comprises wall segments 16 along each fold of the wall, and end wall segments 17 at each turn of the wall. The length of each fold of the wall is about 6cm in the example shown.

On a second scale, the walls between end wall segments 17 are themselves pleated or concertinaed to form the gas delivery and gas removal sub channels 5,8. The length of the gas delivery and gas removal sub-channels is about 2.5mm in the example shown.

This pattern can be repeated on a smaller or larger scale still.

This fractal type arrangement of the flow field, in which gas passes through progressively diminishing channels, means that the arrangement is to some extent scalable to the size of the flow field plate (although there may be limitations to scaling that may be overcome by repeating the flow field, as indicated further below). It further ensures a large surface area to the permeable wall.

This arrangement also ensures that the GDL is well supported by the flow field while ensuring that parts of the MEA lying above the land areas of the flow field are only a short distance from a channel (typically, for the arrangement shown, for the wall segments 16, within 0.5 mm or less of the closest channel and for end wall segment 17, within 1.25mm or less). This arrangement is readily scalable such that smaller wall segments 16 may be used giving still better access of gas to the area above the lands. Preferably no part of the flow field (and in particular of the wall segment 16) is more than 0.25mm from the closest gas delivery or diffusion channel.

To form both gas delivery and gas diffusion channels a technique such as sand blasting may be used in which a patterned template or resist is placed against the surface of a plate, the template or resist having a pattern corresponding to the desired channel geometry. Such a technique is described in WO01/04982, which is incorporated herein in its entirety as enabling the present invention. With this technique the plates may be formed from a graphite/resin composite or other non-porous electrically conductive material that does not react significantly with the reactants used.

Alternatively, the wall could be deposited onto a plate (e.g. by screen printing or the like) and in this case could be formed of a gas permeable material without the use of gas diffusion channels. It will be readily apparent to the person skilled in the art that there are many ways of producing a permeable wall.

Such methods can be used to make all of the flow fields described herein.

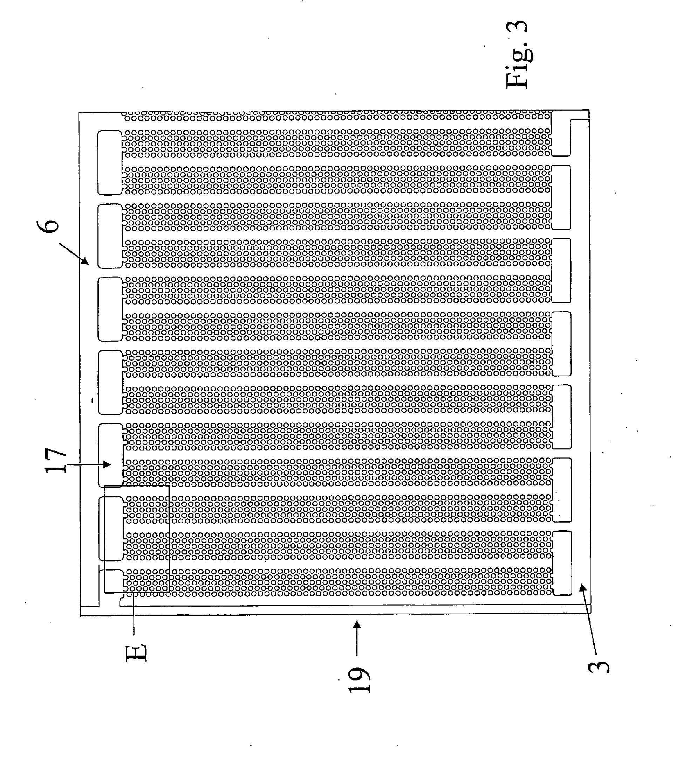

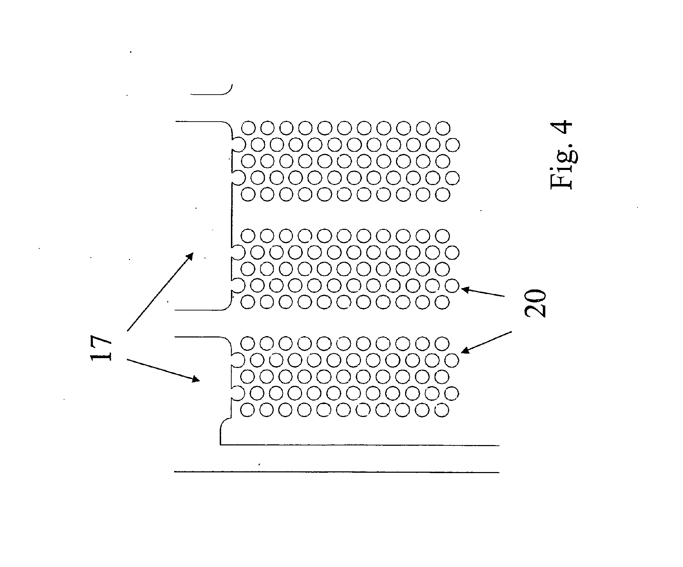

Figs. 3 and 4 show an alternative flow field plate design in accordance with the principles of the present invention. A flow field plate comprises a central area 19 (for use with a surrounding frame 18 [not shown] as in Fig. 1). This has a gas supply channel 3 and a gas drain channel 6 and end wall segments 17 as in Fig. 1.

The permeable walls are defined by an array of lands 20 forming a network of fine gas diffusion channels therebetween. Although circular lands are shown, the applicant has found that hexagonal or other lands offering a relatively non-constant channel width therebetween (e.g. polygonal lands) are preferred. A typical size for the lands is ~750µm ± 250µm with a spacing between lands of ~300µm ± 150µm.

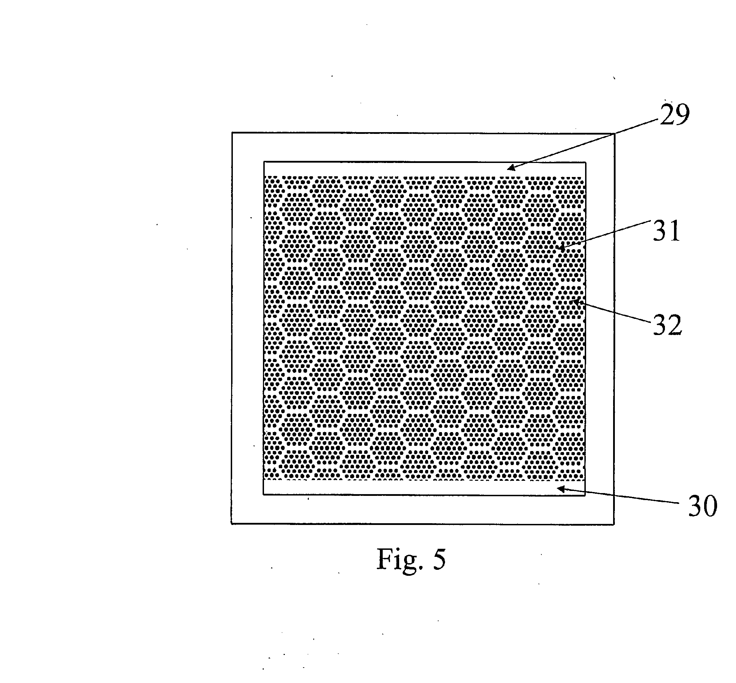

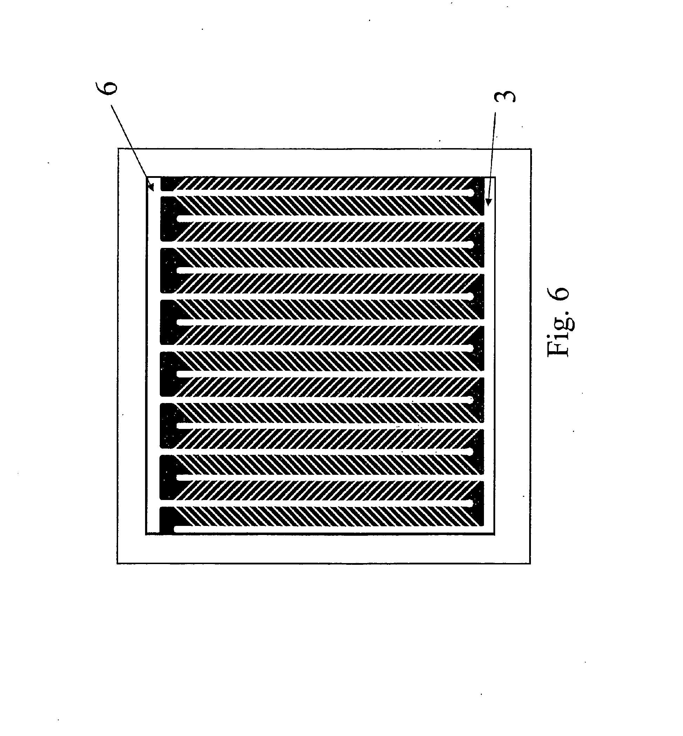

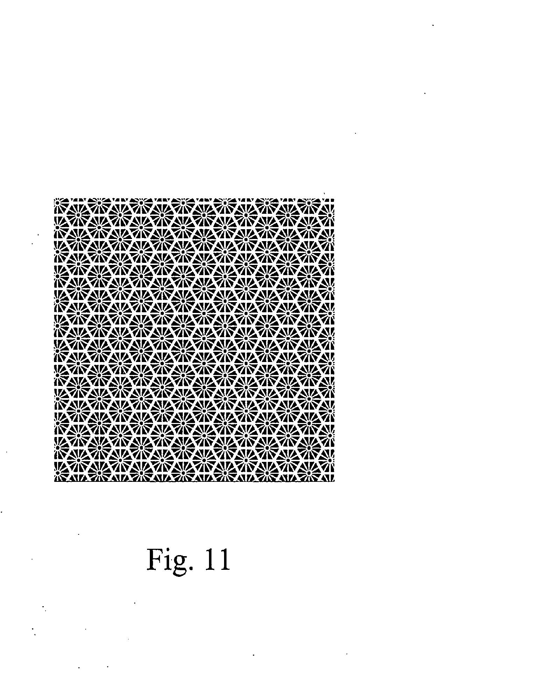

Fig 5 shows in part a design for an array type flow field comprising a hexagonal array of channels connecting inlet channel 29 to outlet channel 30. The array comprises primary gas delivery/removal channels 31 defining a series of blocks 32 each themselves comprising a plurality of interconnected gas diffusion channels. In Fig. 5 the gas diffusion channels themselves form a hexagonal array, but Fig. 11 shows that other arrays of interconnected gas diffusion channels are feasible and contemplated. As with Figs. 3 and 4, although circular lands may be used, the applicant has found that hexagonal or other lands offering a relatively constant channel width therebetween are preferred. Again, a typical size for the lands is ~750µm ± 250µm with a spacing between lands of ~300µm ± 150µm.

Fig. 6 shows in a similar view a further design in accordance with the invention of WO04/001874 in which the permeable wall comprises a series of gas diffusion channels extending at an angle to the gas delivery channels. Typical widths for the gas diffusion channels are ~400µm ± 250µm but could be as small as 10µm.

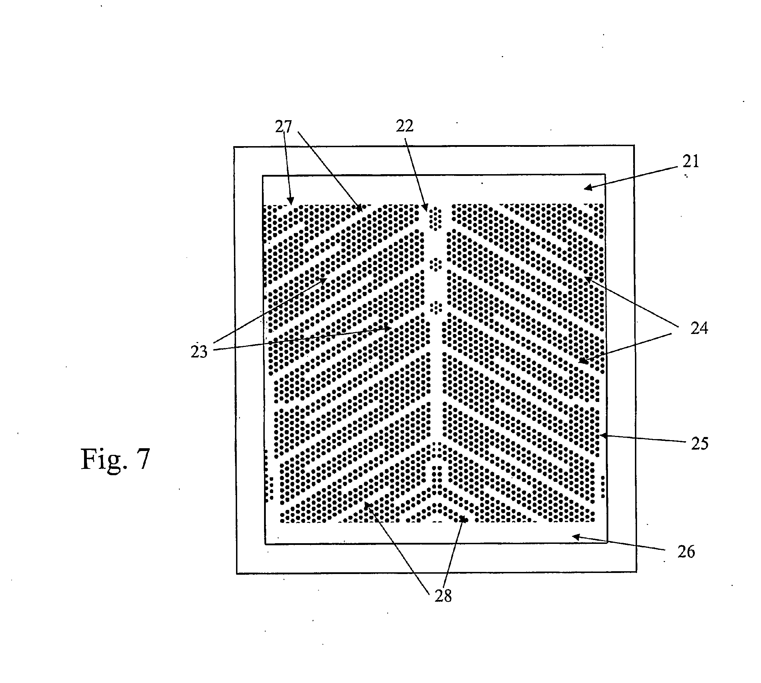

Fig. 7 shows in more detail a design in accordance with the present invention, in which an inlet channel 21 connects to a branched gas delivery channel comprising a main stem 22 with branches 23. The branches 23 are interdigitated with branches 24 from the stems 25 of two branched gas removal channels feeding into an outlet channel 26. A permeable wall defined by lands separates the branched gas delivery channel from the branched gas removal channels.

Subsidiary channels 27 and 28 extend from the inlet channel 21 and outlet channels 26 respectively to provide additional gas delivery/removal to regions where the branched gas delivery/removal channels do not extend.

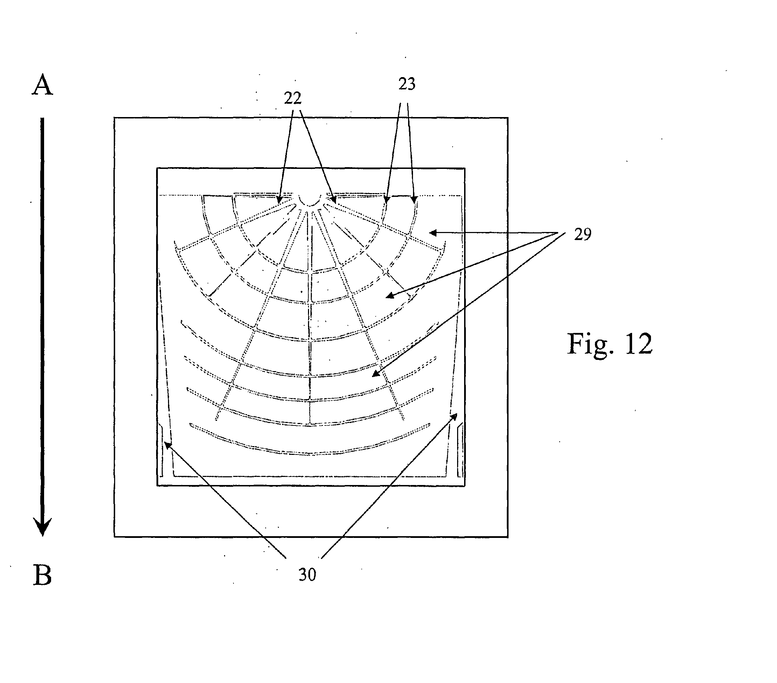

In Fig. 12, another variant of flow field shows a fanned set of distribution tracks, 22, that may or may not include a taper for pressure equilisation. The example shown has linking secondary tracks 23 to aid the gas spreading. The alternative to this are the use of 'drain' tracks such as channels 27 and 28 shown in figure 7. The areas 29 between the channels are formed from an array of lands defining a network of interconnected gas diffusion channels therebetween and diffusion of gas through these channels takes gas to the remainder of the flow field plate. Gas flow results in the direction A-B and gas departs the flow field through gas removal channels 30

In one example:-
- the main stems 22 taper from about 1.25 mm width at the inlet end to about 0.33mm at the end remote from the inlet
- the main stems vary in depth from about 1mm at the inlet end to about 0.5mm at the end remote from the inlet
- the branches 23 are about 0.45mm wide
the areas 29 are formed from an array of diamond or lozenge shaped lands approximately 1.2mm in longest axis disposed in a hexagonal array, with the separation between lands being 0.4mm.

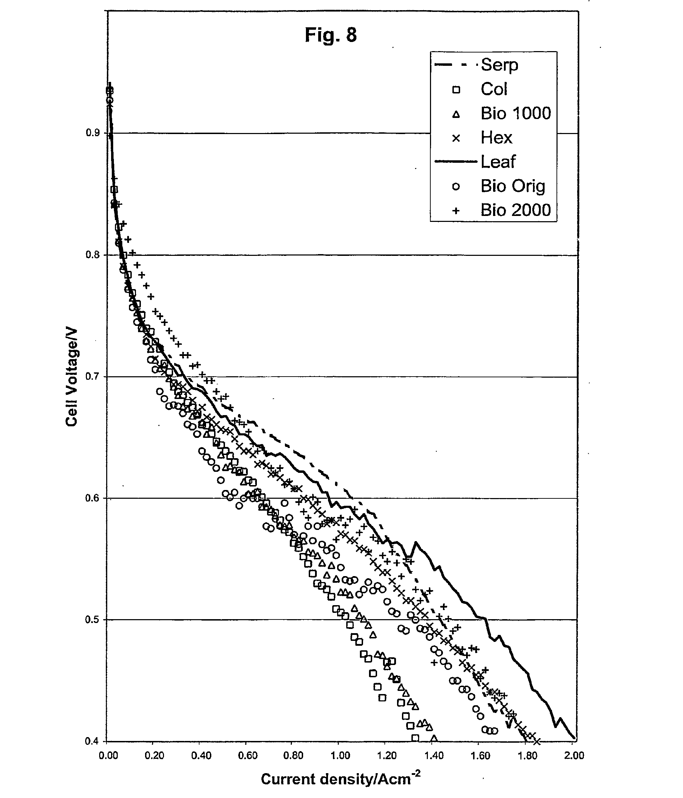

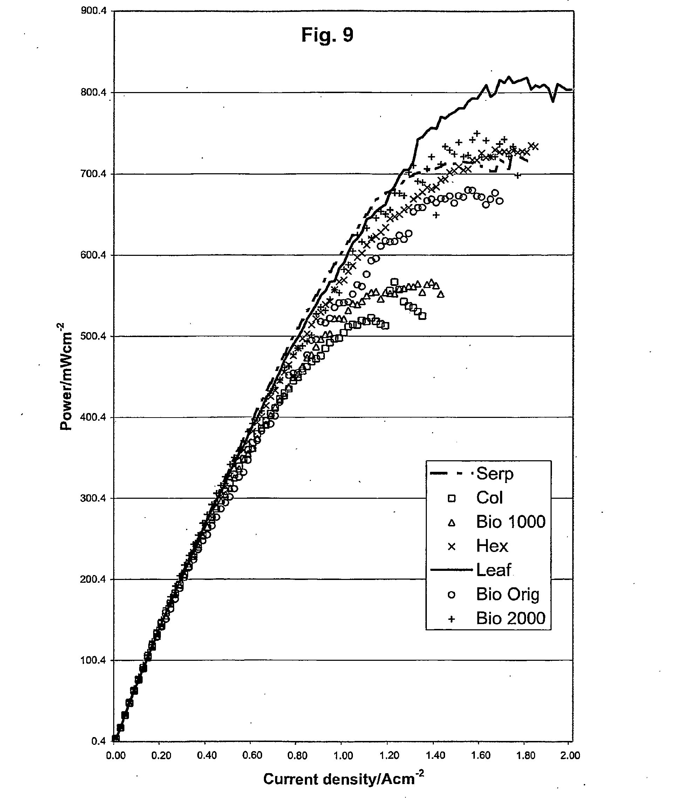

The performance of various flow field geometries were compared as air-side geometries (where water management problems would be revealed) and their relative performance is shown in Figs. 8 and 9, in which Fig. 8 is a polarisation curve comparison of various designs, and Fig. 9 is a corresponding power curve.

The apparatus used to obtain this data comprised Hydrogenics Corporation Screener test stands using Nafion membranes and Toray gas diffusion media. The apparatus was run with Hydrogen at 80% humidity anode and with air also at 80% humidity. All test were isothermal at 80°C on single cells.

The geometries examined were as set out in Table 1. All of the flow field plates were generally square in form of size 100mm × 100mm and with an active area of size 70mm × 70mm.

It will be seen from the graphs that the Col design has by far the worst performance of the designs tested. The applicants believed that this was due to water being trapped in the interstices of the array due to the varying cross section of the gas diffusion channels (an array of round dots leads to channels that bulge and shrink along their length as seen in Fig. 4). To reduce the risk of such water trapping, the applicants produced the Hex array and a dramatic improvement can be seen.

Similarly, the Bio Orig design showed poor performance compared with a serpentine design due to water management problems (even though giving good gas distribution). The Bio 1000 design was an attempt to improve this, but again, the use of round columns lead to problems with water trapping.

The Bio 2000 design was an attempt to reduce the opportunity for water to get trapped, by providing gas diffusion channels of substantially uniform cross-section. It can be seen that this design gives an improved performance, compared to the conventional Serp design, at high-voltage/low-current-density conditions and at low-voltage/high-current-density conditions but is poorer in the mid range.

The Leaf design is comparable with the Serp design at low to medium voltage/current conditions, but when the cell is heavily loaded at high current density the Leaf design gives significantly more power (>10% more when operating over 1.5 A.cm⁻²). The applicants confidently expect that the Leaf design, using hexagonal lands, will exceed this performance.

| Table 1 | |
|---|---|
| Plate Identifier | Description |
| Serp | A serpentine design having 5 tracks of width 750µm and depth 750µm |
| Col | A matrix design comprising an array of round columns of diameter ~750µm with a spacing between lands of ~300µm. |
| Hex | A design in accordance with Fig. 5, and having a primary channel 31 of width 750µm and in which the lands were formed as hexagonal columns of width ~750µm with.a spacing between lands of ~300µm. |
| Bio Orig | A design according to Figs. 1 and 2 with gas delivery channel 4 of width about ~1250µm, sub-channels 5 of width about ~750µm, and diffusion channels 10 about 125µm. |
| Bio 1000 | A design according to Figs. 3 and 4 with gas delivery channel of width 1000µm and having a permeable wall defined by an array of lands formed as round columns of diameter ~750µm with a spacing between lands of ~300µm. |
| Bio 2000 | A design according to Fig. 6 having a gas delivery sub-channels of width 1000µm and gas diffusion channels of width ~400µm. |
| Leaf | A design according to Fig. 7 with a main stem 22 of width 2mm at its base, with branches 23 of width 1mm, having a permeable wall defined by an array of lands formed as round columns of width ~750µm with a spacing between lands of ~300µm. |

Subsequent to the above tests it was found that having the gas diffusion channels of constant width itself contributed to stability of trapped water droplets. The applicants have since found that by strongly varying the width of the channels water droplet instability can be promoted. For example, by using non-circular lands not aligned with the symmetry of the arrangement of the lands (e.g. diamond, square, or triangular shaped lands on a hexagonal array), you provide a strongly varying channel width that leads to droplet instability and improved disposal of water. [An array of hexagonal lands on and aligned with a hexagonal array provides constant width channels that do not have this advantage].

Fuel cells are usually managed so as to operate at their optimum voltage/current density regime, which for serpentine channels generally means below 0.6-0.8A.cm⁻². The Leaf design makes it possible to operate at higher current densities (e.g. 1.6A.cm⁻²) while giving high power (power densities in excess of 750mW.cm⁻² or even > 800 mW.cm⁻² calculated on the working surface of the flow field are achievable). Even without optimising the fuel cell management system to suit this flow field geometry, such high load performance is particularly important for applications where high intermittent loads are experienced.

To assist pressure equalisation along the channels, they may taper, as is described in International Patent Application No. WO02/065565.

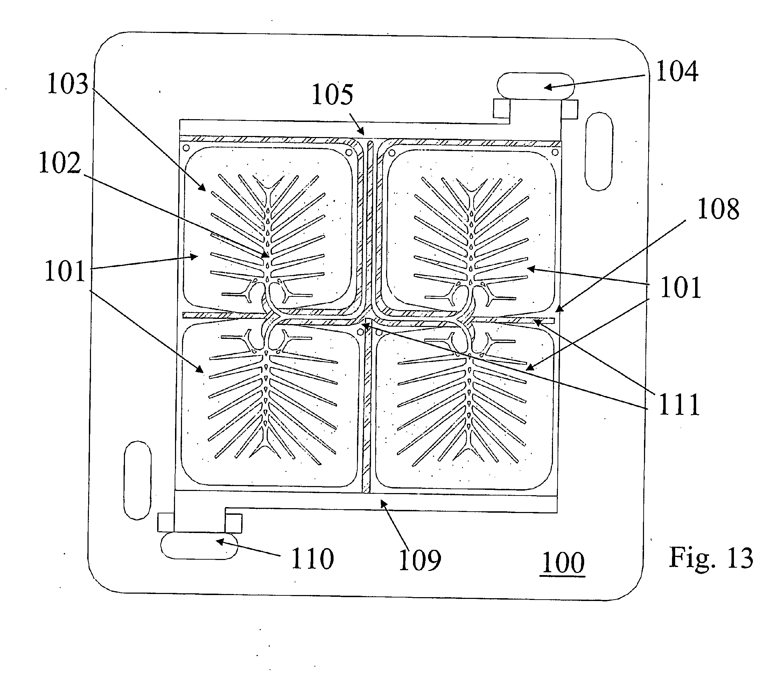

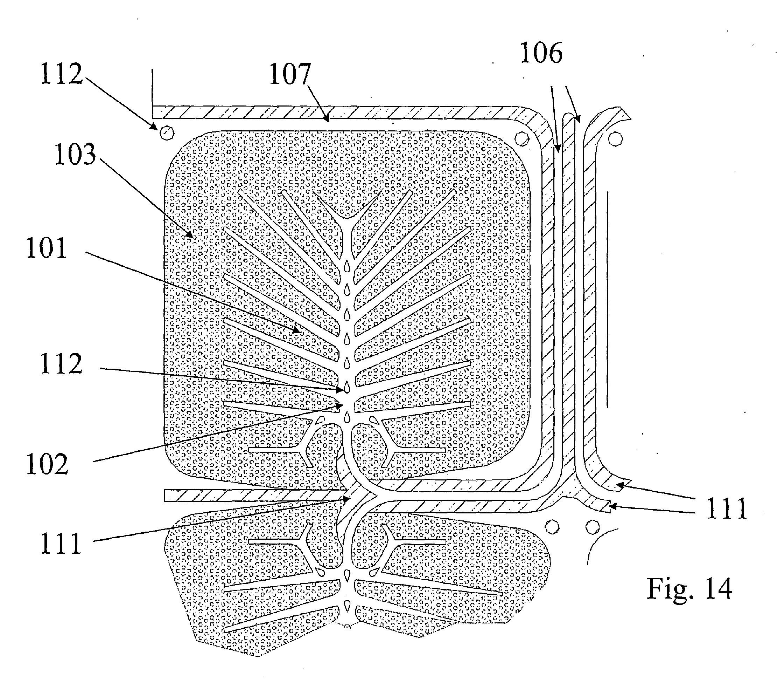

For larger plates and other less simple geometries such as high aspect ratios and other polygonal plates, a repeat unit or unit-cell approach can be used to tile the desired flow field. This is carried out in part to fit the shape but is also a effective way of yielding a more even gas flow and hence more even current generation across the flow field. Figs 13 and 14 show an example for a small plate having a flow field comprising four separate smaller flow fields based on the leaf type cell. The smaller flow fields are provided in pairs, with each pair provided with a common gas feed and to a drain channel at the perimeter of the flow field.

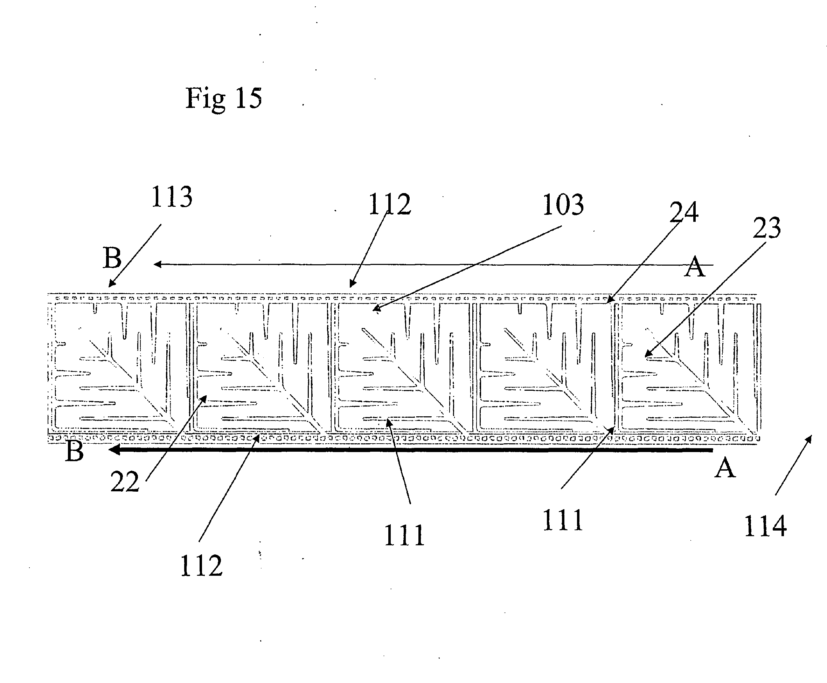

Again, the stem and branch structure could be of a number of variants that include the branched examples shown in Figs 7, 13 and 14 and the fanned structure shown in Fig 12. The cell can be centrally fed as shown in Fig 13 and 14 or diagonally fed, as is Fig 15. A serpentine flow field could even be used.

In more detail, in Figs 13 and 14, a flow field plate 100 comprises four flow field segments101 each comprising a branched gas delivery channel 102, and a permeable region 103 surrounding the branched gas delivery channel.

Manifold 104, and primary gas delivery channel 105 and connecting gas delivery channels 106, feed the branched gas delivery channels 102. [The connecting gas delivery channels 106 in this example are branched, but separate channels to each flow field segment may be provided].

The permeable regions 103 are partially surrounded by gas removal channels 107. The gas removal channels 107 connect to connecting gas removal channels 108 which themselves connect to primary gas removal channel 109 and gas removal manifold 110.

Impermeable barriers 111 separate the primary gas delivery channel 105 and connecting gas delivery channels 106 from the connecting gas removal channels 108 and primary gas removal channel 109.

Additional lands are added to act as a number of ways. Lands 112 are provided as appropriate to resist ingress of the gas diffusion layer into the channels. This is normally only applicable where the width of the channel is such that a significant risk arises or where the gas diffusion layer is high deformable. The other action of the lands 112 in the central stem of the feed is to act as gas diversion devices where the gas flow is encouraged to split and this hence aids spread of the flow down the branches.

In effect, a common gas delivery system (primary gas delivery channel 105 and connecting gas delivery channels 106) feeds a plurality of flow field segments101 which themselves discharge into a common gas removal system (gas removal channels 107, connecting gas removal channels 108, and primary gas removal channel 109).

The arrangement of fuel cells resembles that of lungs. Whereas humans have only two, this arrangement permits many such flow fields to be ganged or tiled together to form a wider flow field.

There are a number of arrangements that can be formed from this concept, the two main classifications are the series and the parallel connected segmented cells. In the parallel connected arrangement each flow field segment is supplied in parallel and each discharges into a common drain. In the series arrangement, the flow draining from one flow field segment is used as the source for another flow field segment.

Fig 15 shows an example of a parallel-connected cell with a common feed where 114 is the inlet and 113 the outlet for the gas. Five smaller flow fields are provided comprising, as above, a main stem 22, secondary feed branches 23, and the drain branches 24 and 25.

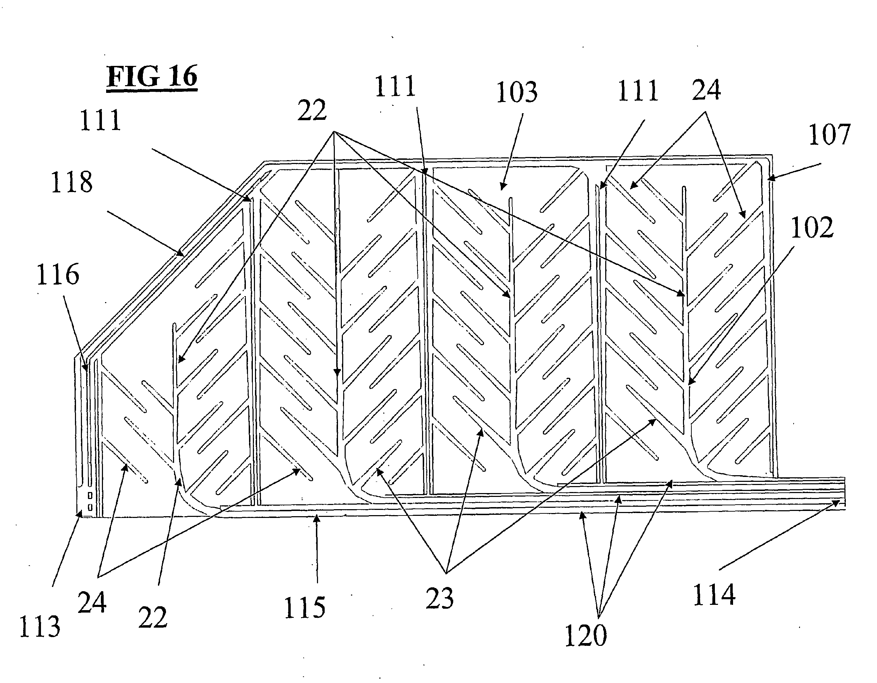

Fig 16 shows a parallel design with direct feed to each of the cells, this example having four cells. Each inlet channel, 114 is divided by a land 120 to form individual channels 121 feeding the individual cells via a main stem, 22, that can be branched in a similar way to the single pattern designs. The separate parts of the inlet channel 114 can be of different cross-section so as to provide balanced flow within the separate segments. Again each segment or repeat is separated by a land strip 111 and the drain is separated from the feed by arrays of columns that act as permeable material.

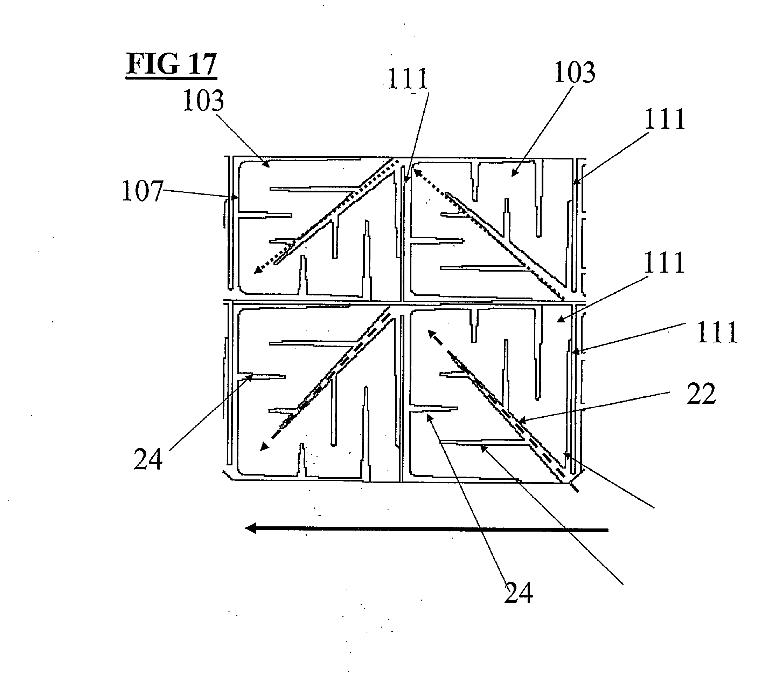

In a similar way Fig. 17 shows a first variant of a series design whereby the inlet for a flow field segment of a flow field array is fed from the outlet of another flow field segment. The individual segments can be formed in any of the arrangements described above. The example shown is for a branched 'leaf' type feed, with main stem 22, secondary branches 23 and drain branches 24 separated by the permeable materials 103.

The flow field segments are divided by barriers 111, which preferably should be of a size large enough to separate the major gas flow between segments and sufficiently small to allow current generation at the membrane above the land area. These strips of repeated segments can be built into an array to cover the whole of the active area of the flow field plate as shown in Fig. 17. Here two rows of segments are fed independently in series so that the whole flow field can be considered as a parallel assembly of series connected flow fields.

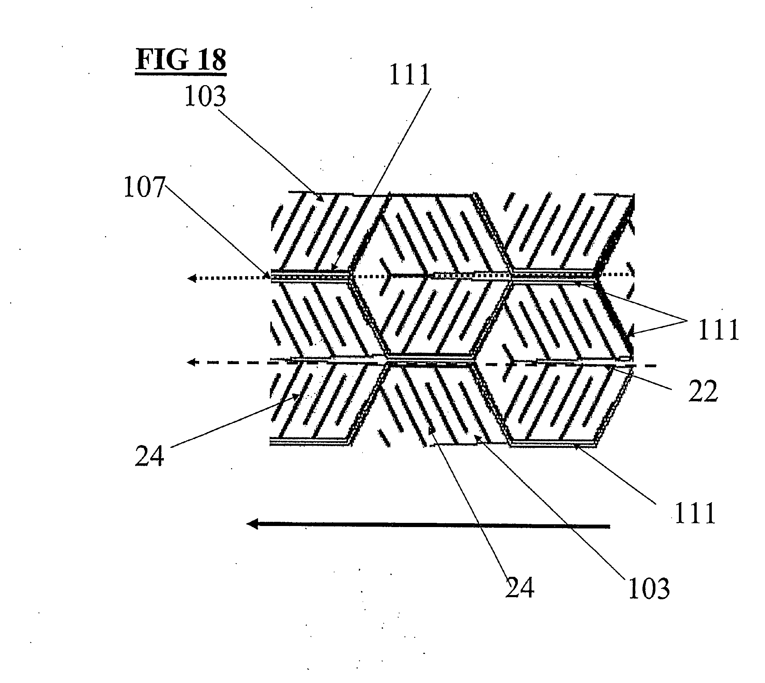

Fig 18 shows another variant of the series design whereby the segments are separated in the same manner as described above using barriers, 111, here the segments are hexagonal or of a shape that can be designed to tessellate with the adjacent segment. Each segment feeds into a drain channel and this is fed into a subsequent downstream segment. This refocusing of the gas flow into a collimated channel increases the gas velocity and aids water mixing into a single phase fluid to reduce the likelihood of condensation and track blockage. Again, this arrangement can be considered as being a parallel arrangement of series connected flow fields.

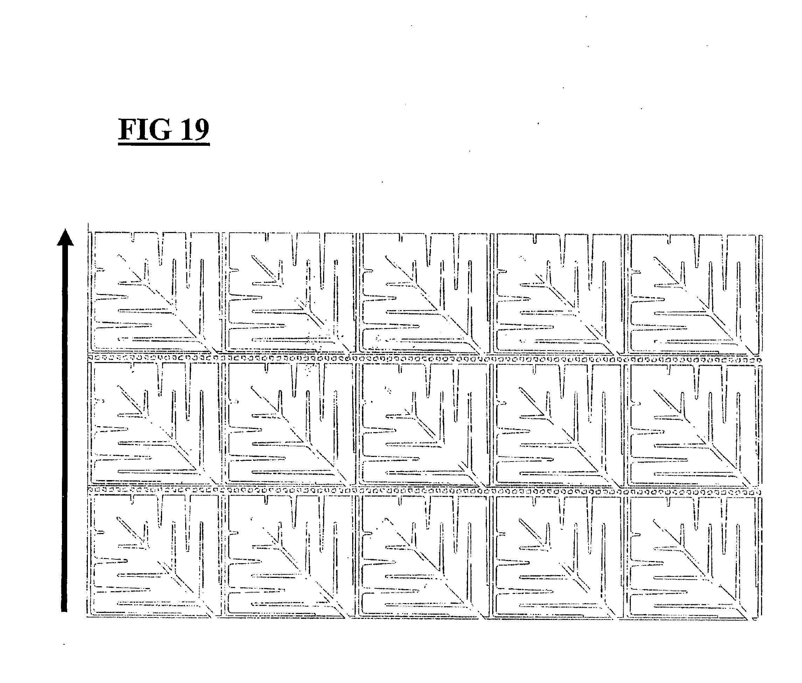

It is evident that an alternative arrangement would be to provide a serial assembly of parallel flow field - e.g. tiling several assemblies as shown in Fig. 15 across the flow field so that the drain 113 of one assembly becomes the source 114 of the adjacent assembly. Fig. 19 shows such an arrangement with flow being generally in the direction of the arrow.

The use of a tesselated flow field has shown to the applicants that there are major benefits in an arrangement in which the flow is dispersed across the face of a segment and then refocussed or gathered before passing to the next region. This refocussing appears to provide a level of back pressure that assists in promoting mixing of the fluid.

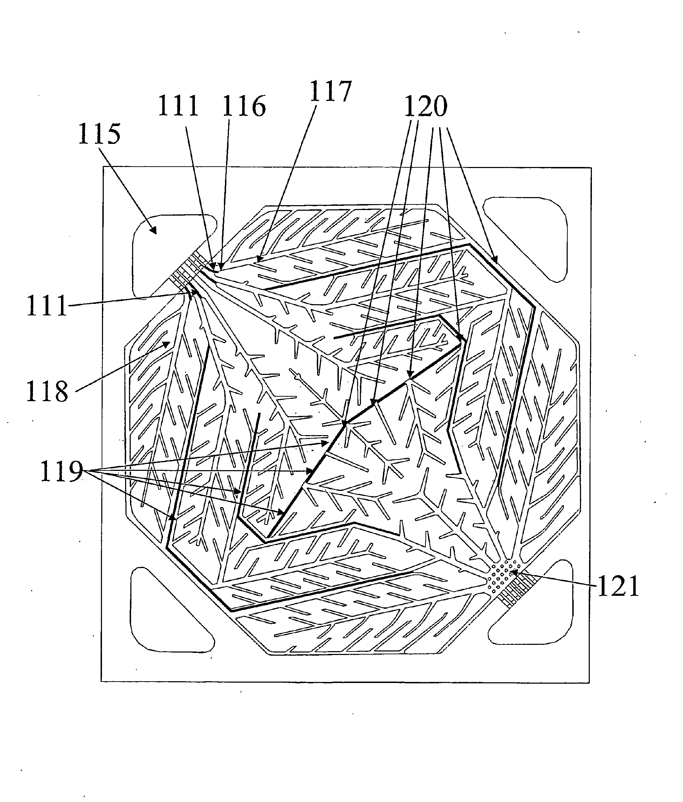

Fig. 20 shows a flow field plate in which fluid entry port 115 communicates with distribution tracks 116 separated by impermeable barriers 111. The distribution tracks 116 communicate with branched fluid delivery channels 117 bounded by a permeable barrier 118 formed from an array of lands forming a network of interconnected fluid diffusion channels therebetween. Distributed in the flow field are further impermeable barriers which separate regions of the flow field to provide choke points 120 for the passage of fluid. Lands 121 at the outlet serve both to prevent ingress of the gas diffusion layer into the flow field, and to provide some back pressure to the system.

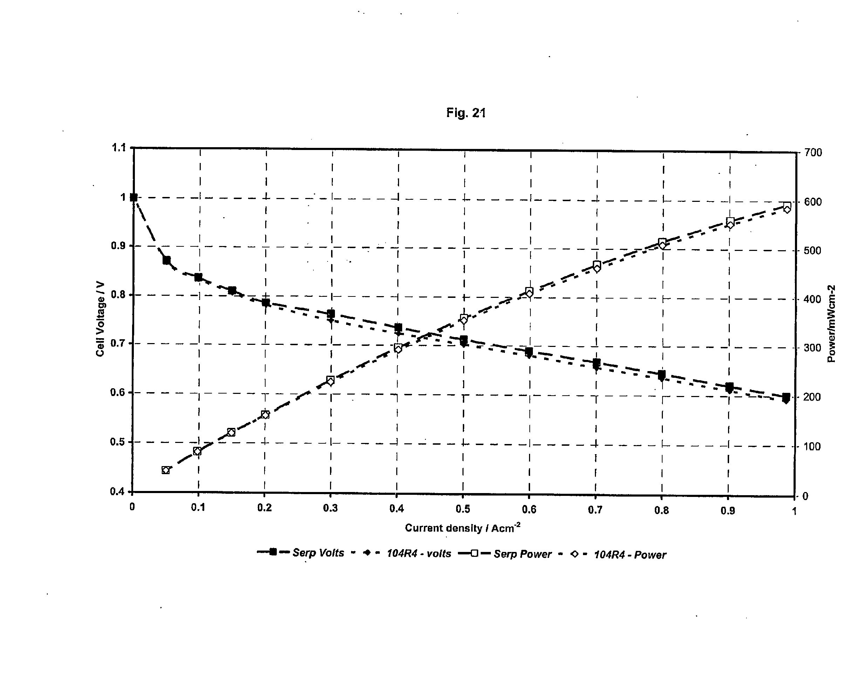

Figs. 21-24 show the results of experiments aimed as providing a comparison between a conventional serpentine plate and a segmented flow field plate of the same area (applicant's reference 104R - equivalent to Fig. 17).

As can be seen from Fig. 21, the voltage and power output of the segmented flow field plate is extremely similar to that of the serpentine system such that they are near interchangeable.

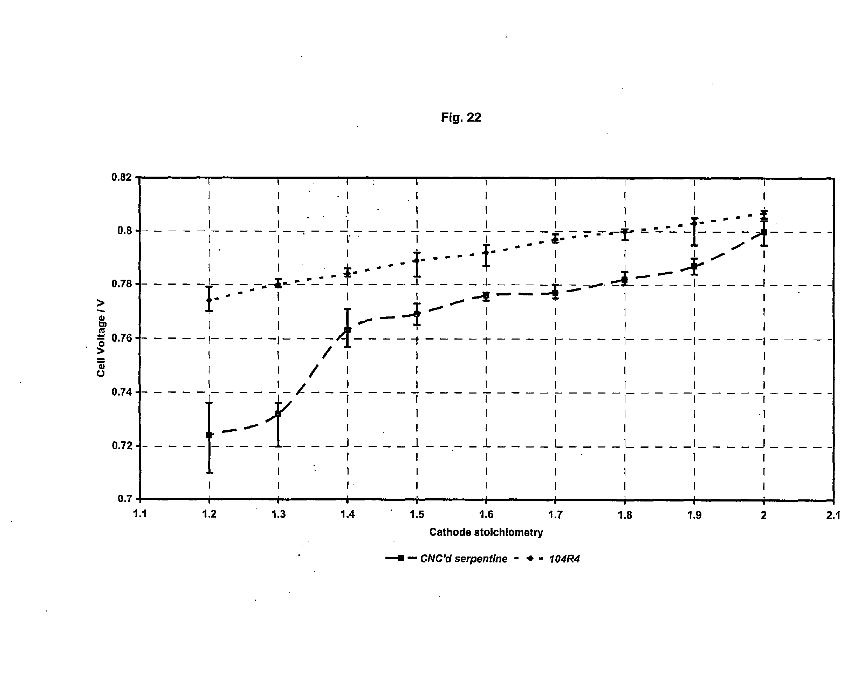

Fig. 22 plots "cathode stoichiometry" against cell voltage at a cell current of 0.15Acm⁻². Cathode stoichiometry is the ratio of oxidant supplied to the cell to the amount necessary to produce the current and is an indicator of the excess air that needs to be supplied to overcome diffusion effects and other impediments to complete reaction. It can be seen from Fig. 22 that the segmented flow field plate is dramatically less sensitive than the serpentine plate to variations in cathode stoichiometry. The applicants have not measured the sensitivity to anode stoichiometry, but assume that a similar situation applies.

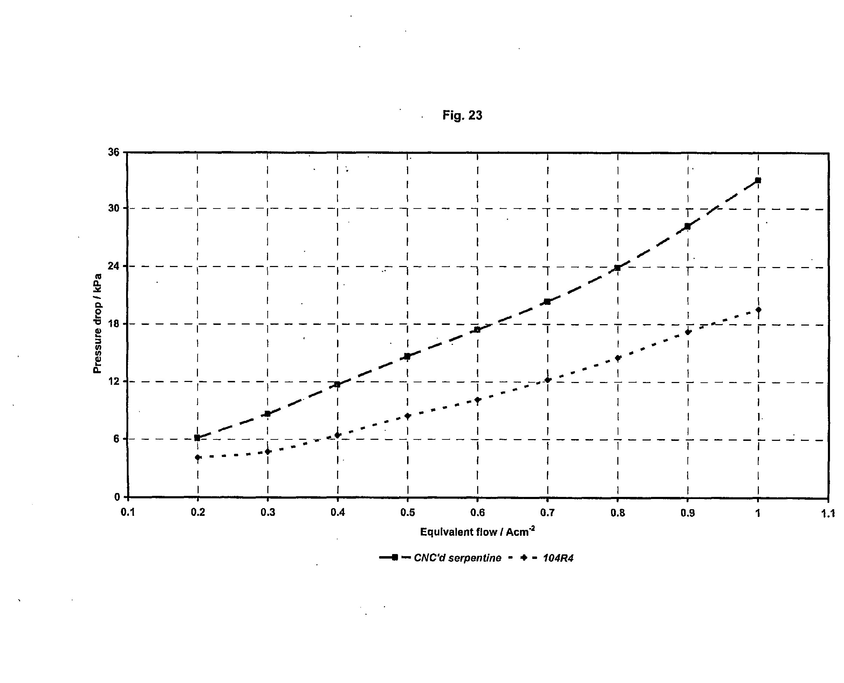

Fig. 23 plots pressure drop across the flow field against "equivalent flow" (the flow required to produce a specified current density expressed as that current density at a given stoichiometry). As can be seen there is a large reduction in pressure drop for the segmented flow field design in comparison with the serpentine plate.

This means that a flow field in accordance with the present invention, in comparison with a serpentine flow field, for an equivalent voltage and power output:-
- gives less variability in output and so reduced need for voltage/current regulation
- requires a lower reactant stoichiometry and so a lower power requirement for pumping reactants, and less venting of fuel to air
- requires a lower pressure drop for a given current and so lower power requirements to supply reactants.

These factors are highly important, since the parasitic losses in fuel and oxidant supply and through voltage regulation can take a large proportion of the power generated by a fuel cell.

The applicants have undertaken extensive computer modelling and Table 2 gives a summary of the results for the serpentine design, the 104R segmented design, and the their 106 design (see Fig. 20) based on a square flow field plate 300cm on each side.

| Table 2 | | | |
|---|---|---|---|
| Design | Serpentine | 104R | 106 |
| Total current (A) | 117 | 142 | 133 |
| Pressure drop (Pa) | 10,770 | 9,310 | 4,820 |
| Active area within ± 10% of average current density | 19.3% | 38.4% | 38.5% |
| Max to average current density ratio | 2.19 | 1.98 | 1.88 |
| Min to average current density ratio | 0.00 | 0.12 | 0.49 |

For a cell operating at an identical voltage, the designs according to the present invention give a higher current, lower pressure drop, and more uniform generation of current across the flow field than the conventional serpentine design (which include regions with zero current production).

These factors translate into lower parasitic losses in the reactant supply apparatus and longer lasting membranes (since more uniform current generation leads to a more uniform temperature distribution).

The more uniform temperature distribution provided by the designs of the present invention leads also to lowered cooling needs since coolant does not need to have the capacity to handle "hot spots".

It should be noted that the 104R and 106 designs are not equivalent and the design philosophy behind this invention means that the various mechanical characteristics (e.g.pressure drop), and electrical characteristics (e.g. voltage and current) can to some extent be individually tailored for the application. In combination with the factors mentioned above this means that flow field plates according to the present invention can be used in at least two ways:-
1) As a direct replacement for serpentine flow fields, having a similar pressure drop but higher power output.
2) As part of a system offering equivalent electrical power output to a serpentine flow field, but having lower parasitic losses.

The flow field designs of the present invention have additional benefits that are becoming apparent during development. For example lower stoichiometry at lower current density implies substantial gas delivery benefits.

The flow fields of the present invention also have the advantage in comparison with conventional serpentine flow fields that their response on start up is faster because the fluids are delivered in a parallel manner across the plate, rather than in a series manner along a channel.

In effect, the flow fields of the present invention can be thought of as comprising a matrix flow field having channels within the matrix, larger than the channels of the matrix, to provide rapid fluid delivery and removal from the matrix.

While the above description has concentrated on the reactant flow fields, it will be evident to the person skilled in the art that the same considerations apply to the coolant flow field.

## Claims

1. A flow field plate (separator) for a fuel cell or electrolyser, comprising one or more branched primary fluid delivery/removal channels feeding narrower secondary fluid diffusion channels defined by an array of lands forming a network of interconnected fluid diffusion channels therebetween.

2. A flow field plate, as claimed in Claim 1, in which the flow field comprises a tiled array of flow field segments defining a reactant flow field, each segment comprising one or more branched primary fluid delivery/removal channels feeding narrower secondary fluid diffusion channels defined by an array of lands forming a network of interconnected fluid diffusion channels therebetween.

3. A flow field plate as claimed in Claim 2, in which the flow field segments are arranged in parallel.

4. A flow field plate as claimed in Claim 2, in which the flow field segments are arranged in series.

5. A flow field plate as claimed in Claim 2, in which the flow field segments are arranged as a parallel assembly of series connected flow field segments.

6. A flow field plate as claimed in Claim 2, in which the flow field segments are arranged as a series assembly of parallel connected flow field segments.

7. A flow field plate, as claimed in any one of Claims 1 to 6, in which the branched primary fluid delivery/removal channels comprise a hexagonal network of channels.

8. A flow field plate, as claimed in any one of Claims 1 to 6, comprising one or more branched fluid delivery channels, interdigitated with one or more branched fluid removal channels, and a permeable wall separating same formed by the array of lands.

9. A flow field plate as claimed in Claim 8, in which the permeable wall is concertinaed, having wall segments extending along each fold of the wall, and end wall segments at each turn of the wall.

10. A flow field plate, as claimed in any one of Claims 1 to 9, in which the lands are shaped to define fluid diffusion channels having substantially constant width.

11. A flow field plate, as claimed in any one of Claims 1 to 9, in which the lands are shaped to define fluid diffusion channels having a strongly variable channel width.

12. A flow field plate, as claimed in Claim 11, in which the lands are non-circular and not aligned with the symmetry of the arrangement of the lands.

13. A flow field plate, as claimed in Claim 12, in which the lands are diamond, square, or triangular shaped lands on a hexagonal array.

14. A flow field plate, as claimed in Claim 10, in which the lands are polygonal in form.

15. A flow field plate, as claimed in Claim 14, in which the lands are hexagonal in form

16. A flow field plate, as claimed in any one of Claims 1 to 15, in which the flow field comprises impermeable barriers separating regions of the flow field and with apertures in or defined by the impermeable barriers providing choke points for the passage of fluid

17. A flow field plate, as claimed in any one of Claims 1 to 16, in which the fluid delivery/removal channels and the fluid diffusion channels are gas delivery/removal channels and gas diffusion channels respectively.

18. A flow field plate, as claimed in Claim 17, in which lands are provided in the gas delivery/removal channels to resist ingress in use of a gas diffusion layer into channels of the flow field.

19. A fuel cell comprising one or more flow field plates in accordance with any one of Claims 1 to 18.

20. A fuel cell as claimed in Claim 19, in which the power deliverable by each flow field plate is in excess of 750mW.cm⁻² calculated on the working surface of the flow field.

## Patentansprüche

1. Strömungsfeldplatte (Separator) für eine Brennstoffzelle oder einen Elektrolyseur, umfassend einen oder mehrere verzweigte primäre Kanäle zur Zufuhr / Abfuhr von Fluid, welche engere sekundäre Fluiddiffusionskanäle speisen, definiert durch eine Anordnung von Stegen, welche untereinander ein Netz von miteinander verbundenen Fluiddiffusionskanälen bilden.

2. Strömungsfeldplatte nach Anspruch 1, wobei das Strömungsfeld eine gekachelte Anordnung von Strömungsfeldsegmenten umfasst, welche ein Strömungsfeld für Reaktanden definieren, wobei jedes Segment einen oder mehrere verzweigte primäre Kanäle zur Zufuhr / Abfuhr von Fluid umfasst, welche engere sekundäre Fluiddiffusionskanäle speisen, definiert durch eine Anordnung von Stegen, welche untereinander ein Netz von miteinander verbundenen Fluiddiffusionskanälen bilden.

3. Strömungsfeldplatte nach Anspruch 2, wobei die Strömungsfeldsegmente parallel angeordnet sind.

4. Strömungsfeldplatte nach Anspruch 2, wobei die Strömungsfeldsegmente in Serie angeordnet sind.

5. Strömungsfeldplatte nach Anspruch 2, wobei die die Strömungsfeldsegmente angeordnet sind als parallele Gruppierung seriell verbundener Strömungsfeldsegmente.

6. Strömungsfeldplatte nach Anspruch 2, wobei die Strömungsfeldsegmente angeordnet sind als serielle Gruppierung parallel verbundener Strömungsfeldsegmente.

7. Strömungsfeldplatte nach einem der Ansprüche 1 bis 6, wobei die verzweigten primären Kanäle zur Zufuhr / Abfuhr von Fluid ein hexagonales Netz von Kanälen umfassen.

8. Strömungsfeldplatte nach einem der Ansprüche 1 bis 6, umfassend einen oder mehrere verzweigte Fluidzufuhrkanäle, verzahnt mit einem oder mehreren Fluidabfuhrkanälen, und einer permeablen Wand, die selbige voneinander trennt, gebildet durch die Anordnung von Stegen.

9. Strömungsfeldplatte nach Anspruch 8, wobei die permeable Wand eine mäanderartige Faltung besitzt, aufweisend Wandsegmente, die sich entlang jeder Falte der Wand erstrecken, und End-Wandsegmente an jeder Windung der Wand.

10. Strömungsfeldplatte nach einem der Ansprüche 1 bis 9, wobei die Stege derart geformt sind, dass sie Fluiddiffusionskanäle mit im Wesentlichen konstanter Breite definieren.

11. Strömungsfeldplatte nach einem der Ansprüche 1 bis 9, wobei die Stege derart geformt sind, dass sie Fluiddiffusionskanäle mit stark variabler Kanalbreite definieren.

12. Strömungsfeldplatte nach Anspruch 11, wobei die Stege keine Kreisform aufweisen und ihre Symmetrie nicht übereinstimmt mit jener der Gruppierung der Stege.

13. Strömungsfeldplatte nach Anspruch 12, wobei die Stege rautenförmige, quadratische oder dreieckige Stege in einer hexagonalen Anordnung sind.

14. Strömungsfeldplatte nach Anspruch 10, wobei die Stege eine Polygonform besitzen.

15. Strömungsfeldplatte nach Anspruch 14, wobei die Stege eine hexagonale Form besitzen.

16. Strömungsfeldplatte nach einem der Ansprüche 1 bis 15, wobei das Strömungsfeld impermeable Barrieren umfasst, welche Bereiche des Strömungsfelds voneinander trennen und Öffnungen in den oder begrenzt durch die impermeablen Barrieren aufweisen, welche Drosselstellen für den Durchgang von Fluid bereitstellen.

17. Strömungsfeldplatte nach einem der Ansprüche 1 bis 16, wobei die Kanäle zur Zufuhr / Abfuhr von Fluid und die Fluiddiffusionskanäle Kanäle zur Zufuhr / Abfuhr von Gas beziehungsweise Gasdiffusionskanäle sind.

18. Strömungsfeldplatte nach Anspruch 17, wobei in den Kanälen zur Zufuhr / Abfuhr von Gas Stege bereitgestellt werden, um bei Betrieb einen Widerstand zu bilden gegen den Zustrom einer Gasdiffusionsschicht in Kanäle des Strömungsfelds.

19. Brennstoffzelle, umfassend eine oder mehrere Strömungsfeldplatten nach einem der Ansprüche 1 bis 18.

20. Brennstoffzelle nach Anspruch 19, wobei die Leistung, die von jeder Strömungsfeldplatte geliefert werden kann, höher ist als 750 mW·cm⁻², bezogen auf die Arbeitsfläche des Strömungsfelds.

## Revendications

1. Plaque de champ d'écoulement (séparateur) pour une pile à combustible ou un électrolyseur, comprenant un ou plusieurs canaux ramifiés primaires de délivrance/retrait de fluide alimentant des canaux de diffusion de fluide secondaires plus étroits définis par un réseau de méplats formant entre eux un réseau de canaux de diffusion de fluide interconnectés.

2. Plaque de champ d'écoulement selon la revendication 1, dans laquelle le champ d'écoulement comprend un réseau dallé de segments de champ d'écoulement définissant un champ d'écoulement de réactif, chaque segment comprenant un ou plusieurs canaux ramifiés primaires de délivrance/retrait de fluide alimentant des canaux de diffusion secondaires plus étroits définissant un réseau de méplats formant entre eux un réseau de canaux de diffusion de fluide interconnectés.

3. Plaque de champ d'écoulement selon la revendication 2, dans laquelle les segments du champ d'écoulement sont disposés en parallèle.

4. Plaque de champ d'écoulement selon la revendication 2, dans laquelle les segments de champ d'écoulement sont disposés en série.

5. Plaque de champ d'écoulement selon la revendication 2, dans laquelle les segments de champ d'écoulement sont disposés sous forme d'un assemblage en parallèle de segments de champ d'écoulement connectés en série.

6. Plaque de champ d'écoulement selon la revendication 2, dans laquelle les segments de champ d'écoulement sont disposés sous forme d'un assemblage en série de segments de champ d'écoulement connectés en parallèle.

7. Plaque de champ d'écoulement selon l'une quelconque des revendications 1 à 6, dans laquelle les canaux primaires ramifiés de délivrance/retrait de fluide comprennent un réseau hexagonal de canaux.

8. Plaque de champ d'écoulement selon l'une quelconque des revendications 1 à 6, comprenant un ou plusieurs canaux ramifiés de délivrance de fluide, emboîtés sur un ou plusieurs canaux ramifiés de retrait de fluide et une paroi perméable séparant ceux ceux -ci et formés par le réseau de méplats.

9. Plaque de champ d'écoulement selon la revendication 8, dans laquelle la paroi perméable est repliée en accordéon, ayant des segments de paroi s'étendant le long de chaque pli de la paroi et des segments de paroi d'extrémité à chaque coude de la paroi.

10. Plaque de champ d'écoulement selon l'une quelconque des revendications 1 à 9, dans laquelle les méplats sont façonnés pour définir des canaux de diffusion de fluide ayant une largeur sensiblement constante.

11. Plaque de champ d'écoulement selon l'une quelconque des revendications 1 à 9, dans laquelle les méplats sont façonnés pour définir des canaux de diffusion de fluide ayant une largeur de canal très variable.

12. Plaque de champ d'écoulement selon la revendication 11, dans laquelle les méplats ne sont pas circulaires et ne sont pas alignés avec la symétrie de l'aménagement des méplats.

13. Plaque de champ d'écoulement selon la revendication 12, dans laquelle les méplats sont des méplats en forme de diamant, de carré ou de triangle en réseau hexagonal.

14. Plaque de champ d'écoulement selon la revendication 10, dans laquelle les méplats sont de forme polygonale.

15. Plaque de champ d'écoulement selon la revendication 14, dans laquelle les méplats sont de forme hexagonale.

16. Plaque de champ d'écoulement selon l'une quelconque des revendications 1 à 15, dans laquelle le champ d'écoulement comprend des barrières imperméables séparant des régions du champ d'écoulement et avec des ouvertures à l'intérieur ou définies par les barrières imperméables offrant des points d'étranglement pour le passage de fluide.

17. Plaque de champ d'écoulement selon l'une quelconque des revendications 1 à 16, dans laquelle les canaux de délivrance/retrait de fluide et les canaux de diffusion de fluide sont des canaux de délivrance/ret rait de gaz et des canaux de diffusion de gaz, respectivement.

18. Plaque de champ d'écoulement selon la revendication 17, dans laquelle des méplats sont aménagés dans les canaux de délivrance/retrait de gaz pour s'opposer à une entrée en service d'une couche de diffusion de gaz dans des canaux du champ d'écoulement.

19. Pile à combustible comprenant une ou plusieurs plaques de champ d'écoulement selon l'une quelconque des revendications 1 à 18.

20. Pile à combustible selon la revendication 19, dans laquelle l'énergie délivrable par chaque plaque de champ d'écoulement est de plus de 750 mW.cm⁻² en calculant sur la surface de travail du champ d'écoulement.
